# Europäisches Patentamt

## European Patent Office

## Office européen des brevets

(11) Veröffentlichungsnummer: **0 023 626**
**B1**

(12) **EUROPÄISCHE PATENTSCHRIFT**

(45) Veröffentlichungstag der Patentschrift:
**23.10.85**

(51) Int. Cl.⁴: **C 08 G  18/80**

(21) Anmeldenummer: **80104131.0**

(22) Anmeldetag: **16.07.80**

(54) **Herstellung von freie NCO- und endständig mit Epsilon-Caprolactam blockierte NCO-Gruppen enthaltenden Isophorondiisocyanataddukten, sowie danach hergestellte Verbindungen.**

(30) Priorität: **19.07.79  DE 2929224**

(43) Veröffentlichungstag der Anmeldung:
**11.02.81 Patentblatt 81/6**

(45) Bekanntmachung des Hinweises auf die Patenterteilung:
**23.10.85 Patentblatt 85/43**

(84) Benannte Vertragsstaaten:
**BE CH DE FR GB IT LI LU NL SE**

(56) Entgegenhaltungen:
**EP - A - 0 000 798**
**EP - A - 0 009 694**
**DE - A - 2 456 469**
**DE - A - 2 542 191**
**DE - B - 2 047 718**
**US - A - 4 055 550**

(73) Patentinhaber: **CHEMISCHE WERKE HÜLS AG,
Postfach 1320, D-4370 Marl 1 (DE)**

(72) Erfinder: **Gras, Rainer, Dr., An der Ziegelei 91,
D-4690 Herne 2 (DE)**
Erfinder: **Wolf, Elmar, Dr., Am Böckenbusch 3a,
D-4690 Herne 2 (DE)**

(74) Vertreter: **Steil, Hanna, Dipl.-Chem. et al, RSP PATENTE
- PB 15 Postfach 1320, D-4370 Marl 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die vorliegende Erfindung betrifft ein Verfahren zur Herstellung von Verbindungen mit hohem latenten Isocyanat-Gehalt sowie noch freien, nicht blockierten Isocyanat-Gruppen, und die nach diesem Verfahren erhältlichen teilweise blockierten Verbindungen.

Verkappte Isocyanate, auch Isocyanatabspalter genannt, sind seit langem bekannte Verbindungen (Houben—Weyl, Methoden der organischen Chemie XIV/2 S. 61—70). Als Blockierungsmittel sind z. B. ε-Caprolactam, tertiäre Alkohole, Phenole, Acetessigester, Malonsäureester, Cyanwasserstoff bekannt.

Diese verkappten Isocyanate besitzen die Eigenschaft, bei erhöhter Temperatur wie Isocyanate zu reagieren. Die Abspaltung ist um so leichter, je acider das Wasserstoffatom der Maskierungsgruppe ist. Im Gegensatz zu den freien Isocyanaten lassen sich mit verkappten Isocyanaten Mischungen mit hydroxylgruppenhaltigen Substanzen und gegebenenfalls Lösungsmittel herstellen, ohne daß beim Mischen oder Lösen bei relativ niedriger Temperatur, d. h. unterhalb der Aufspalttemperatur, hierbei eine Reaktion stattfindet. Man ist also in der Lage, mit verkappten Polyisocyanaten lagerstabile Mischungen mit hydroxylgruppenhaltigen Produkten wie höhermolekularen Polyestern, Hydroxyacrylaten oder Polyäthern herzustellen, die erst bei höherer Temperatur, d. h. bei oder oberhalb der Aufspaltungstemperatur der Addukte eine gewünschte Isocyanatreaktion eingehen. Sie sind zur Herstellung kautschukelastischer Produkte über lagerfähige Zwischenstufen als auch zur Herstellung von Lacken speziell von Pulverlacken, für Metallackierungen von nicht unerheblicher wirtschaftlicher Bedeutung.

Pulverisierbare Polyepoxide waren die ersten Bindemittel, die als Rohstoffe für Pulverlacke größeres Interesse fanden. Erst 1965 wurden zum ersten Mal Phenol verkappte Isocyanate als neue Ausgangsprodukte für Pulverlacke in DD-PS 55 820 genannt. Pulvrige Mischungen aus hochschmelzenden, hydroxylgruppenhaltigen Polyestern und Polyisocyanaten, deren Isocyanatgruppen durch Phenol blockiert sind, lassen sich durch elektrostatisches Spritzen oder Besprühen auf Substrate auftragen und nachfolgend durch Erhitzen zu Überzügen aushärten. Die Nachteile dieses Verfahrens sind durch die Phenolabspaltung bedingt: starke Geruchsbelästigung, Verlaufsstörungen, insbesondere durch Blasenbildung.

Gemäß der Lehre der DE-OS 1 957 483 werden diese Nachteile vermieden, wenn man ε-Caprolactam verkappte Polyisocyanate anstelle der vorher erwähnten Phenol verkappten Verbindungen verwendet. Für manche Anwendungen ist allerdings die Reaktivität dieser dort beschriebenen Systeme aus ε-Caprolactam blockierten aliphatischen Diisocyanaten mit hydroxylgruppenhaltigen Polyestern selbst in Gegenwart von Katalysatoren nicht ausreichend.

Des weiteren ist es gemäß EP-A 798 bereits bekannt, mit ε-Caprolactam im wesentlichen voll blockierte Gemische aus monomerem Isophorondiisocyanat und dessen Trimerisat, dem Isocyanurat, zusammen mit hydroxylgruppenhaltigen Polyestern für pulverförmige Polyurethanlacke einzusetzen. Der Zusatz der Monomeren dient zur Erniedrigung des Schmelzbereiches, nach dem Stand der Technik darf die Erweichungstemperatur der blockierten Harze nicht oberhalb 120—130°C liegen.

Auch in der EP-A-9 694 wird aus diesen Gründen für das Lackpolyisocyanat ein Gemisch der Monomeren und Trimeren eingesetzt.

Entgegen der vorherrschenden Meinung wurde nun gefunden, daß zur Herstellung von pulverförmigen PUR-Beschichtungen mit gutem Verlauf auch vorteilhaft Härter eingesetzt werden können, deren Schmelzpunkt oberhalb der Grenze von 120—130°C liegt.

Gegenstand der Erfindung ist daher ein Verfahren zur Herstellung von freie NCO-Gruppen und endständig mit ε-Caprolactam blockierte NCO-Gruppen enthaltende Isophorondiisocyanataddukte, dadurch gekennzeichnet, daß man monomerenfreies trimerisiertes Isophorondiisocyanat mit ε-Caprolactam in solchen Mengenverhältnissen einsetzt, daß pro Mol Isocyanurat 0,1 bis 1 Mol, insbesondere 0,1 bis 0,4 Mol, NCO-Gruppen frei bleiben.

Gegenstand der Erfindung sind weiterhin auch die nach dem Verfahren hergestellten Produkte.

Überraschenderweise werden nur wenige Gew.-% des zur Blockierung verwendeten ε-Caprolactams bei Vernetzungsreaktionen, z. B. in Lackkompositionen an die Umgebung abgegeben. Diese Tatsache ist nur so zu erklären, daß in erster Reaktionsstufe die freien NCO-Gruppen mit den eingesetzten Zerewitinoff-aktiven Verbindungen abreagieren. Das Blockierungsmittel ε-Caprolactam wird dann in zweiter Reaktionsstufe verdrängt und überwiegend in die Polyurethankunststoffe eingeschlossen.

Besonders geeignet für die Trimerisierung von Isophorondiisocyanat ist das in DE-OS 2 644 684 beschriebene Katalysatorsystem aus Triäthylendiamin (Dabco®)/Propylenoxid. Die Trimerisierung kann in Substanz oder in inerten organischen Lösungsmitteln vorgenommen werden. Zur Durchführung des Trimerisierungsverfahrens ist es wesentlich, die Reaktion bei einem bestimmten NCO-Gehalt der Mischung abzubrechen, und zwar vorzugsweise dann, wenn 30—50% der NCO-Gruppen unter Trimerisierung reagiert haben. Das nicht umgesetzte Isophorondiisocyanat wird dann durch Dünnschichtdestillation vom Isocyanurat abgetrennt.

Reines Isophorondiisocyanat hat einen NCO-Gehalt von 37,8%. Der theoretische NCO-Wert des trimerisierten Isophorondiisocyanat ist 18,9%, in praxi liegt er bei 16—18%.

Der Zusatz des isocyanuratfreien Isophorondiisocyanats gestattet auf einfache Weise die Eigenschaften der Verfahrensprodukte, insbesondere ihren Schmelzpunkt, ihre Glaserweichungstemperatur sowie ihre Viskosität in gewünschter Weise zu variieren.

Zur Durchführung der Blockierungsreaktion wird im allgemeinen die Isocyanatkomponente vorgelegt und $\varepsilon$-Caprolactam zugegeben. Die Reaktion kann in Substanz oder auch in Gegenwart geeigneter (inerter) Lösungsmittel durchgeführt werden. Die Blockierungsreaktion wird im allgemeinen bei 120—160°C durchgeführt. Auch können für die Isocyanat-Polyadditionsreaktionen beschleunigende Katalysatoren, wie z. B. Zinn-II-octoat und/oder tertiäre Amine, mitverwendet werden. Die Katalysatoren werden in der Regel in einer Menge zwischen 0,001—1 Gew.-% bezogen auf die Menge an Verbindungen mit gegenüber Isocyanaten reaktionsfähigen Wasserstoffatomen zugesetzt.

Die Verfahrensprodukte eignen sich insbesondere als Härter für Zerewitinoff-aktive Wasserstoffatome aufweisende höherfunktionelle thermoplastische Verbindungen. In Kombination mit derartigen Zerewitinoff-aktive Wasserstoffatome aufweisenden Verbindungen bilden die Verfahrensprodukte oberhalb 120°C, vorzugsweise bei 160—220°C zu hochwertigen Kunststoffen aushärtbare Systeme.

## Beispiel 1

### a) Herstellung des Isophorondiisocyanat/Isocyanurat-Gemisches

1000 Gew.-T. Isophorondiisocyanat wurden mit dem Katalysatorsystem aus 1,4-Diazabicyclooctan-(2,2,2)-Dabco und Propylenoxid-1,2 (Gewichtsverhältnis Dabco : Propylenoxid 1 : 2) 3 h bei 120°C erhitzt. In dieser Zeit fiel der ursprüngliche NCO-Gehalt des Einsatzproduktes von 37,8% auf ca. 29% NCO. Es wurde nun möglichst schnell auf Raumtemperatur abgekühlt, bei der sich der NCO-Gehalt auch nach mehreren Wochen nur unwesentlich veränderte. Das noch niedrigviskose Reaktionsgemisch wurde nun ohne vorherige Desaktivierung des Katalysators der Dünnschichtdestillation zugeführt. Bei 150—160°C/0,1 Torr wurde das Monomere abdestilliert. Der Rückstand hat einen NCO-Gehalt von 17,9%. Dieses monomerfreie Isocyanatoisocyanurat besitzt einen Schmelzbereich von 86—89°C.

### b) $\varepsilon$-Caprolactamblockierung des in 1a) hergestellten Isocyanatoisocyanurat

Zu 234,6 Gew.-T. des in 1a) hergestellten Isocyantoisocyanurates wurden bei 160°C 96 Gew.-T. $\varepsilon$-Caprolactam portionsweise so zugegeben, daß die Reaktionstemperatur nicht über 165°C anstieg. Zur Vervollständigung der Reaktion wurde noch 1 h bei 165°C erhitzt.

| | |
|---|---|
| Freies NCO | 1,9% |
| Blockiertes NCO | 10,8% |
| Schmelzbereich | 132—155°C |
| Glasumwandlungstemperatur (DTA) | 65— 87°C |

## Patentansprüche

1. Verfahren zur Herstellung von freie NCO-Gruppen und endständig mit $\varepsilon$-Caprolactam blockierte NCO-Gruppen enthaltenden Isophorondiisocyanataddukten, dadurch gekennzeichnet, daß man monomerenfreies trimerisiertes Isophorondiisocyanat mit $\varepsilon$-Caprolactam in solchen Mengenverhältnissen einsetzt, daß pro Mol Isocyanurat 0,1 bis 1 Mol, insbesondere 0,1 bis 0,4 Mol, NCO-Gruppen frei bleiben.

2. Freie NCO- und mit $\varepsilon$-Caprolactam blockierte NCO-Gruppen enthaltendes monomerenfreies Isocyanurat aus Isophorondiisocyanat, hergestellt nach Anspruch 1.

## Claims

1. Process for the preparation of isophoronediisocyanate adducts containing free NCO groups and terminally $\varepsilon$-caprolactam-blocked NCO groups, characterised in that monomer-free trimerised isophoronediisocyanate is employed together with the $\varepsilon$-caprolactam in such quantitative ratios that 0.1 to 1 mol, especially 0.1 to 0.4 mol, of NCO groups remains free per mol of isocyanurate.

2. Monomer-free isocyanurate, containing free NCO groups and NCO groups blocked with $\varepsilon$-caprolactam, and prepared according to claim 1.

3

**Revendications**

1. Procédé pour la fabrication de produits d'addition de diisocyanate d'isophoron contenant des groupes NCO libres et des groupes NCO bloqués en bout de chaîne par un E-caprolactame, caractérisé en ce que l'on utilise le diisocyanate d'isophoron trimérisé, exempt de monomère, comportant de l'E-caprolactame dans des rapports tels que, par mode d'isocyanurate, il reste libre 0,1 à 1 mole, ou mieux 0,1 à 0,4 mole de groupes NCO.

2. Isocyanurates exempts de monomère contenant des groupes NCO libres et des groupes NCO bloqués par un E-caprolactame, obtenus à partir de diisocyanate d'isophoron fabriqué suivant la revendication 1.